Europäisches Patentamt

European Patent Office

Office européen des brevets

(19)

(11) Numéro de publication: **0 276 599 B1**

(12) **FASCICULE DE BREVET EUROPEEN**

(45) Date de publication de fascicule du brevet: **09.09.92**   (51) Int. Cl.5: **G02B 6/30**

(21) Numéro de dépôt: **87402860.8**

(22) Date de dépôt: **15.12.87**

(54) **Dispositif de connexion de fibres optiques à un circuit optique intégré, et procédé de réalisation.**

(30) Priorité: **19.12.86 FR 8617889**

(43) Date de publication de la demande:
**03.08.88 Bulletin 88/31**

(45) Mention de la délivrance du brevet:
**09.09.92 Bulletin 92/37**

(84) Etats contractants désignés:
**DE GB IT NL SE**

(56) Documents cités:
**EP-A- 0 170 457
DE-A- 3 232 508
FR-A- 2 497 362**

**PATENT ABSTRACTS OF JAPAN, vol. 3, no.
124 (E-144), 17 octobre 1979, page 81 E 144;
& JP-A-54 100 751**

**PATENT ABSTRACTS OF JAPAN, vol. 10, no.
45 (P-430)[2102], 21 février 1986; & JP-A-60
191 210**

**IBM TECHNICAL DISCLOSURE BULLETIN, vol.
25, no. 8, janvier 1983, pages 4095-4096, New
York, US; G.A. SHEKITA: "Fiber-optic connector with inherent wrap capability"**

**APPLIED OPTICS, vol. 21, no. 7, 1 avril 1982,
pages 1310-1319, Optical Society of America,
New York, US; J.T. CHILWELL: "Prism coupler
jig. interference fringes enable observation
of the coupling gap"**

(73) Titulaire: **THOMSON-CSF
51, Esplanade du Général de Gaulle
F-92800 Puteaux(FR)**

(72) Inventeur: **Lefevre, Hervé
THOMSON-CSF SCPI 19, avenue de Messine
F-75008 Paris(FR)**
Inventeur: **Bann, Sambath
THOMSON-CSF SCPI 19, avenue de Messine
F-75008 Paris(FR)**

(74) Mandataire: **Turlèque, Clotilde et al
THOMSON-CSF SCPI
F-92045 PARIS LA DEFENSE CEDEX 67(FR)**

## Description

L'invention concerne un dispositif de connexion de fibres optiques à un circuit optique intégré et son procédé de réalisation. Notamment ce dispositif fournit un moyen de connectique fibre sur circuit optique intégré stable en température et résistant aux vibrations.

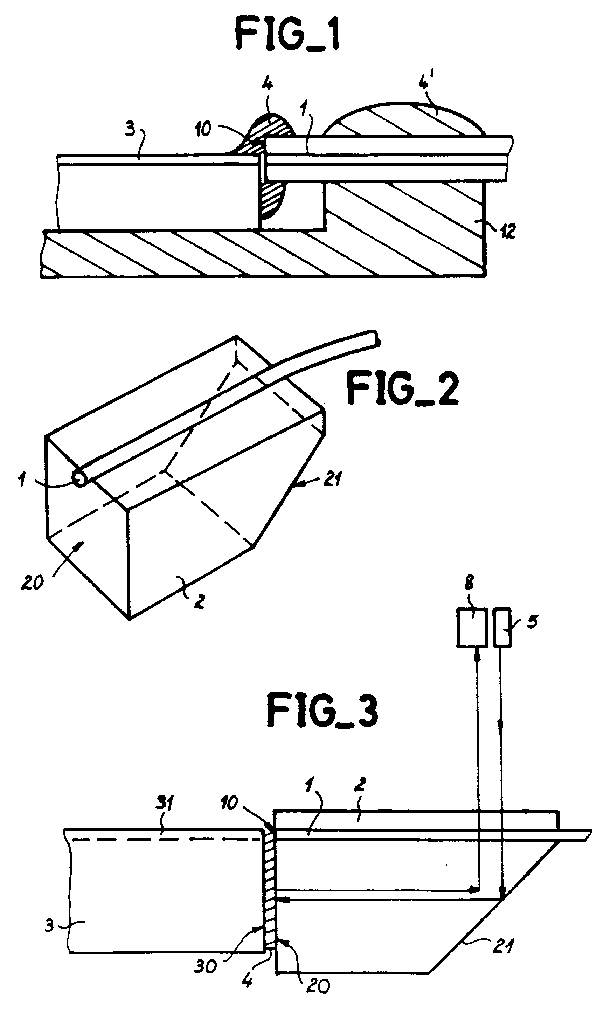

Les systèmes connus prévoient de maintenir une fibre, de polir ou de cliver une extrémité de cette fibre et de l'approcher du circuit optique intégré de façon à immobiliser la face de cette extrémité de la fibre parallèlement à l'entrée du circuit optique intégré. Ensuite, une colle est déposée autour de la fibre et du circuit optique intégré pour, qu'après collage, la fibre et le circuit soient solidaires. Cette connexion est renforcée en collant la fibre sur un support 12 à l'aide d'un plot de colle 4'. On obtient ainsi un ensemble tel que représenté en figure 1 ou l'on trouve la fibre 1 maintenue dans un support 12. La fibre 1 a une face 10 à proximité d'un circuit optique intégré 3 et la fibre 1 est collée au circuit 3 par de la colle 4.

Cependant, selon les techniques connues, il est difficile d'une part de coupler parfaitement la fibre optique au circuit optique intégré et, d'autre part, d'obtenir un collage résistant. En effet, il est fréquent qu'un léger effort conduise à une cassure au niveau du collage. De plus, des variations de température peuvent être à l'origine de modifications ou d'altérations du couplages optiques.

L'invention concerne un dispositif et un procédé permettant de résoudre ces difficultés.

L'invention concerne donc un système de connexion comportant une fibre optique, un circuit optique intégré et un dispositif de connexion connectant une extrémité de la fibre optique à une extrémité d'un guide optique affleurant à une face d'un circuit optique intégré, caractérisé en que ledit dispositif comporte :

- un bloc de connexion transparent dans lequel est maintenu la fibre optique, ledit bloc possédant d'une part, une première face polie dans le plan de laquelle affleure ladite extrémité de la fibre, cette première face étant disposée parallèlement à ladite face du circuit optique intégré, et d'autre part, une deuxième face inclinée par rapport à la première face permettant l'entrée et la sortie, dans ledit bloc de connexion d'un faisceau lumineux éclairant sous un angle déterminé, l'interstice situé entre la première face du bloc de connexion et la face du circuit optique intégré et permettant la formation des franges d'interférences dans ledit interstice ; et
- une couche de colle placée entre la première face du bloc de connexion et la face du circuit optique intégré.

L'invention concerne également un procédé de connexion mettant en oeuvre le dispositif de connexion selon l'une quelconque des revendications précédentes, caractérisé en ce que l'on prévoit les différentes étapes suivantes :

- mise en place d'une fibre optique dans ledit bloc de connexion avec une extrémité de la fibre dépassant ladite première face du bloc de connexion ;
- polissage ou clivage de cette extrémité de la fibre et de ladite première face ainsi que d'une face du circuit optique intégré à laquelle doit être couplée l'extrémité de la fibre ;
- mise en place du bloc de connexion contre la face du circuit optique intégré de telle façon que la première face du bloc de connexion soit parallèle à la face du circuit optique intégré ;
- simultanément avec l'étape précédente, éclairage de la première face du bloc de connexion et de ce fait de la double interface circuit-air et air-bloc et observation des franges d'interférence renvoyées par cette double interface ;
- réglage latéral du coeur de la fibre selon la direction de propagation du guide optique ; et
- introduction par capillarité d'une colle, entre la première face du bloc de connexion et de la face du circuit optique intégré.

Les différents objets et caractéristiques de l'invention apparaîtront plus clairement dans la description qui va suivre faite à titre d'exemple, en se reportant aux figures annexées qui représentent :

- la figure 1, un dispositif de connexion selon l'art connu déjà décrit précédemment ;
- la figure 2, un connecteur pour fibre optique selon l'invention ;
- les figures 3 et 4, un dispositif de connexion d'une fibre optique à un circuit optique intégré selon l'invention ;
- la figure 5, une variante de réalisation d'un connecteur selon l'invention ;
- la figure 6, une variante du dispositif de connexion d'une fibre optique à un circuit optique intégré selon l'invention ;
- la figure 7, une variante de réalisation de l'invention permettant de coupler deux fibres optiques à deux points très rapprochés d'un circuit optique intégré ;
- la figure 8, des dispositifs de connexion utilisable dans le cadre de la variante de réalisation de la figure 7 ;
- la figure 9, un appareil permettant de mettre en oeuvre le procédé de l'invention.

Sur la figure 2, on a représenté un embout ou bloc de connexion 2 possédant une rainure dans laquelle est placée une fibre 1.

Ce bloc de connexion possède une première face 20 qui selon l'exemple de la figure 2, est sensiblement perpendiculaire à la fibre et une deuxième face 21 faisant un angle (en général de 45°) avec la première face 20.

Comme cela est représenté en figure 3, le bloc de connexion est placé contre une face 30 d'un circuit optique intégré 3 avec la face 20 parallèle à la face 30.

Le bloc de connexion peut être avantageusement fabriqué dans un même matériau que celui du substrat du circuit optique intégré, par exemple un oxyde mixte de Lithium et de Niobium ($LiNbO_3$) et avoir les mêmes axes d'anisotropie.

Le bloc de connexion est alors collé directement sur la face 30 du circuit optique intégré à l'aide d'une couche de colle 4.

A titre d'exemple le bloc de connexion pourra avoir 3 à 5 mm de longueur selon le sens de la fibre 1 et environ 1 à 2 mm de côté de section.

Il est important pour une bonne stabilité de réduire au maximum l'épaisseur de colle 4 utilisée ainsi que de s'assurer du parallèlisme des faces 20 et 30 en contact du circuit et du bloc de connexion. Il faut donc analyser les franges d'égale épaisseur entre les deux faces 20 et 30:

La face 21 faisant office de miroir de renvoi fabriqué dans le bloc de connexion facilite cette visualisation.

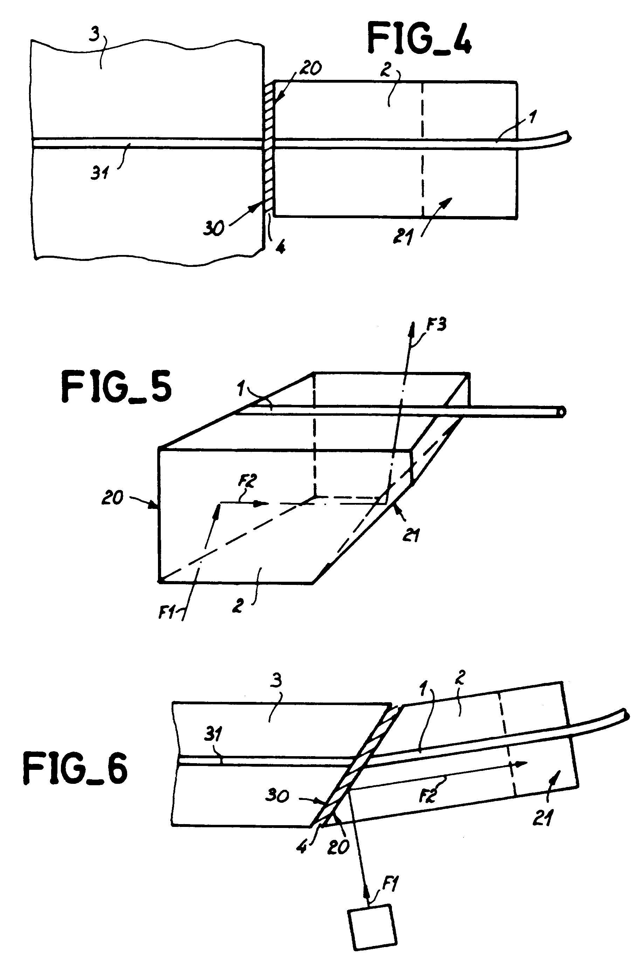

Pour cela, comme cela est représenté en figures 3 et 4, une source lumineuse 5 émet un faisceau lumineux F0 qui est transmis par la face 21 au double interface compris entre les faces 20 du bloc de connexion et 30 du circuit optique intégré.

Le faisceau lumineux F1 reçu par ces interfaces est réfléchi de façon variable si les deux faces 20 et 30 ne sont pas parallèles. Une partie de ce faisceau est réfléchie par la face 20 du bloc de connexion 2 et l'autre partie du faisceau est réfléchie, par la face 30 du circuit optique intégré. Un faisceau F2 est réfléchi et transmet une image représentant les franges d'interférences des deux parties de faisceau réfléchies par les faces 20 et 30, et traduisant ainsi, d'une part, les différences de parallélisme entre les faces 20 et 30, et d'autre part, la distance qui les sépare, notamment les franges étant noires lorsque les faces sont en contact.

Le faisceau F2 est renvoyé par la face 21, sous la forme d'un faisceau F3 à un dispositif d'observation 8 des franges d'interférence. Ce dispositif 8 peut être tout simplement un microscope binoculaire.

Après avoir effectué le réglage du parallélisme des faces 20 et 30 en fonction de l'observations des franges et réglé la position latérale du coeur de la fibre optique 1 par rapport à l'axe du guide optique 31, on procède an collage des faces 20 et 30 en introduisant par capillarité la colle entre les faces 20 et 30. Les deux faces sont alors maintenues parallèlement, jusqu'à séchage de la colle.

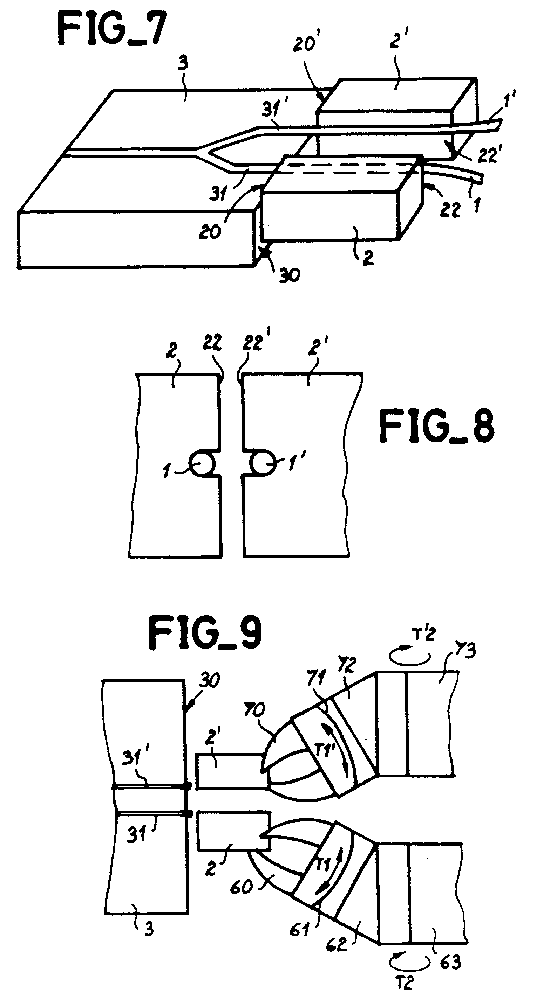

La figure 7, représente un dispositif de connexion permettant de connecter deux fibres optiques 1 et 1′ à un même circuit optique intégré 3 en des zones très proches, espacées par exemple d'environ 300 micromètres. Ce type de connexion peut se rencontrer dans le cas de connexions de fibres aux branches d'un même circuit optique intégré, telle que les branches d'une jonction Y ou autre circuit optique tel que cela est représenté en figure 7.

Dans ce cas on utilise deux blocs de connexion (2, 2′) tel que décrits précédemment.

Chaque fibre 1, 1′, comme cela est représenté en figure 8 est placée dans une rainure faites dans une faces 22, 22′ d'un blocs 2, 2′. Les deux faces sont ensuite mises en vis à vis.

Pour réaliser des faces 20 et 20′ de meilleure qualité avec les extrémités des fibres 1, 1′ affleurant ces faces sans qu'il y ait, sur les bords des fibres de défauts dus à l'usinage et au polissage, les deux bloc contenant les fibres 1 et 1′ sont plaquées l'une à l'autre par leurs faces 22 et 22′ pour réaliser le polissage des faces 20 et 20′.

La connexion des blocs de connexion au circuit optique intégré se fait par réglage du parallélisme puis collage des faces 20 et 30 d'une part et 20′ et 30′ d'autre part comme cela a été décrit précédemment.

Cependant la mise en place des blocs de connexion 2 et 2′ et le réglage du parallélisme des faces 20, 30, et 20′, 30 est difficile à réaliser en raison de la faible distance séparant les deux blocs de connexion 2 et 2′, cette distance pouvant être d'environ 300 micromètres comme on l'a dit précédemment.

Pour cela, chaque bloc de connexion 2, 2′ est manipulé par une pince 60, 70.

Chaque pince (60, 70) est solidaire d'une première articulation à berceau (61, 71) pouvant tourner selon les flèches T1, T′1 autour d'un axe perpendiculaire au plan de la figure. Chaque berceau est fixé à une cale en forme de coin (62, 72), laquelle cale est solidaire d'une deuxième articulation à berceau (63, 73) pouvant tourner selon les flèches T2, T′2 autour d'un axe contenu dans le plan de la figure. Les cales en forme de coin 62 et 72 ont leur section la plus faible dirigée l'une vers l'autre ce qui permet un mouvement très proche des pinces 60 et 70 tout en écartant les articulations 63 et 73 ainsi que les dispositifs de commande non représentés qui les commandent.

Dans ce qui précède, on n'a pas considéré les indices de réfraction relatif des matériaux constituant la fibre et le circuit optique intégré. En effet, pour tenir compte de ces indices de réfraction, il y a lieu de prévoir que la direction de chaque fibre soit inclinée par rapport à la direction de propagation du circuit optique intégré correspondant (31, 31')comme cela est représenté en figure 6.

Par exemple, dans le cas où le circuit optique intégré est en Niobate de Lithium d'indice de réfraction n30 = 2,2 et la fibre 1 en silice d'indice n1 = 1,45, des inclinaisons par rapport aux faces de jonction 30 et 20 doivent être prévues. La face 30 du circuit optique intégré doit être polie de façon que la direction du guide 31 fasse un angle d'environ 10 degrés avec la normale au plan de la face 30. La face 20 du bloc de connexion doit être polie de telle façon que l'axe de la fibre 1 fasse un angle d'environ 15 degrés avec la normale au plan de la face 20. La fibre 1 fait ainsi un angle de 5 degrés par rapport à la direction du guide optique 31 pour que la connexion soit adaptée aux différences d'indices entre la fibre et le circuit optique intégré. Il est bien évident que dans le cas de connexion de plusieurs fibres, chaque fibre doit être connectée à un circuit optique intégré en répondant à ces conditions angulaires.

Cependant le système d'éclairement de la double interface constitué par les faces 20 et 30 et l'observation des franges d'interférences renvoyées par cette double interface pose un problème. Pour cela on prévoit, comme cela est représenté en figure 5, de tailler la face 20 du bloc de connexion de façon que l'on doive éclairer la face 20 sous incidence oblique pour que le faisceau diffracté F2 soit réfléchi (faisceau F3) dans une direction différente de celui de la source lumineuse.

Pour cela, la normale à la face 20 n'est pas contenue dans un plan normal à la face 21.

Comme cela est représenté en figure 6, la source 5 émet un faisceau F1 qui est réfléchi vers la face 21 par la double interface (20-30). La face 21 réfléchit un faisceau, non représenté, selon une direction perpendiculaire au plan de la figure.

Selon les exemples de réalisations précédemment décrits la face 21 sert à réfléchir le faisceau F2 pour le diriger en sortie vers le dispositif d'observation 8. Cependant, il est bien évident que sans sortir du cadre de l'invention, la source lumineuse et le dispositif d'observation 8 peuvent être permuttés et les sens des faisceaux lumineux peuvent être inversés.

Il est bien évident que la description qui précède n'a été faite qu'à titre d'exemple non limitatif et que d'autres variantes peuvent être envisagés sans sortir du cadre de l'invention.

**Revendications**

1. Système de connexion comportant une fibre optique, un circuit optique intégré et un dispositif de connexion connectant une extrémité de la fibre optique (1) à une extrémité d'un guide optique (31) affleurant à une face (30) du circuit optique intégré (3), caractérisé en ce que ledit dispositif comporte :

   - un bloc de connexion transparent (2) dans lequel est maintenu la fibre optique (1), ledit bloc possédant, d'une part, une première face (26) polie dans le plan de laquelle affleure ladite extrémité de la fibre , cette première face (20) étant disposée parallèlement à ladite face (30) du circuit optique intégré (3), et d'autre part, une deuxième face (21) inclinée par rapport à la première face (20) permettant l'entrée et la sortie, dans ledit bloc de connexion, d'un faisceau lumineux éclairant sous un angle déterminé, l'interstice situé entre la première face (20) du bloc de connexion (2) et la face du circuit optique intégré (30), et permettant la formation des franges d'interférences dans ledit interstice ; et,
   - une couche de colle (4) placée entre la première face (20) du bloc de connexion (2) et la face (30) du circuit optique intégré (3).

2. Système de connexion selon la revendication 1, caractérisé en ce que la première face (20) du bloc de connexion (2) fait un angle de sensiblement 45 degrés par rapport à la deuxième face (21).

3. Système de connexion selon la revendication 1, caractérisé en ce que la normale à la première face (20) n'est pas contenue dans un plan normal à la deuxième face (21).

4. Système de connexion selon la revendication 1, caractérisé en ce que deux fibres optiques (1, 1') sont respectivement disposées dans deux blocs de connexion (2, 2') chacune dans dans une face rainurée, lesdites faces rainurées (22, 22') de ces blocs étant disposées parallèlement, les extrémités de ces fibres affleurant des premières faces (20, 20') correspondantes des blocs de connexion (2, 2'), lesdites premières faces (20, 20') étant disposées parallèlement à la face (30) du circuit optique intégré.

5. Procédé de connexion mettant en oeuvre le dispositif de connexion selon l'une quelconque des revendications précédentes, caractérisé en ce que l'on prévoit les différentes étapes suivantes :

   - mise en place d'une fibre optique (1) dans ledit bloc de connexion (2) avec une extrémité de la fibre dépassant ladite première face (20) du bloc de connexion (2);

- polissage ou clivage de cette extrémité de la fibre (1) et de ladite première face (20) ainsi que d'une face (30) du circuit optique intégré (3) à laquelle doit être couplée l'extrémité de la fibre (1) ;

- mise en place du bloc de connexion (2) contre la face (30) du circuit optique intégré de telle façon que la première face (20) du bloc de connexion (2) soit parallèle à la face (30) du circuit optique intégré ;

- simultanément avec l'étape précédente, éclairage de la première face (20) du bloc de connexion et de ce fait de la double interface circuit (3) - air et air-bloc (2) et observation des franges d'interférences renvoyées par cette double interface ;

- réglage du parallélisme des faces en fonction de l'observation des franges d'interférences ;

- réglage latéral du coeur de la fibre selon la direction de propagation du guide optique ; et,

- introduction par capillarité d'une colle (4) entre la première face (20) du bloc de connexion et de la face (30) du circuit optique intégré (3).

6. Procédé de connexion selon la revendication 5, caractérisé en ce que la mise en place du bloc de connexion se fait à l'aide d'une pince (70) montée sur des berceaux goniométriques permettant une orientation dans tous les sens de l'espace.

7. Procédé de connexion selon la revendication 6, caractérisé en ce que pour mettre en place deux fibres optiques (1, 1') à connecter à des emplacements rapprochés d'un même circuit optique intégré on procède a' l'aide de deux dispositifs à berceaux goniométriques (60 à 63 et 70 à 73), chaque dispositif comportant deux berceaux, claque berceau tournant autour d'un axe, les deux axes étant mutuellement orthogonaux et étant séparés par une cale en forme de coin, les deux arêtes des deux coins des deux dispositifs se faisant face.

8. Procédé de connexion selon la revendication 7, selon laquelle les deux fibres (1, 1') sont maintenues dans des rainures pratiquées dans deux faces (22, 22') de deux blocs de connexion, caractérisé en ce que pour le polissage des premières faces (20, 20') des blocs de connexion et des extrémités des fibres, les deux blocs (2, 2') sont accolés par leurs faces (22, 22') contenant les fibres et que le polissage se fait en maintenant ces faces accolées.

**Claims**

1. Connection system comprising an optical fibre, an integrated optical circuit and a connection device connecting one end of the optical fibre (1) to one end of an optical guide (31) coming flush to one face (30) of the integrated optical circuit (3), characterised in that the said device comprises:

- a transparent connection block (2) in which the optical fibre (1) is held, the said block possessing, on the one hand, a first polished face (20) in the plane of which the said end of the fibre comes flush, this first face (20) being arranged parallel to the said face (30) of the integrated optical circuit (3), and on the other hand, a second face (21) which is inclined with respect to the first face (20) permitting the entry and the exit, in the said connection block, of a light beam illuminating, at a defined angle, the interstice situated between the first face (20) of the connection block (2) and the face of the integrated optical circuit (30), and permitting the formation of interference fringes in the said interstice; and,

- a layer of adhesive (4) placed between the first face (20) of the connection block (2) and the face (30) of the integrated optical circuit (3).

2. Connection system according to Claim 1, characterised in that the first face (20) of the connection block (2) makes an angle of substantially 45 degrees with respect to the second face (21).

3. Connection system according to Claim 1, characterised in that the normal to the first face (20) is not contained in a plane normal to the second face (21).

4. Connection system according to Claim 1, characterised in that two optical fibres (1, 1') are respectively arranged in two connection blocks (2, 2') each in a grooved face, the said grooved faces (22, 22') of these blocks being arranged to be parallel, the ends of these fibres coming flush with the corresponding first faces (20, 20') of the connection blocks (2, 2'), the said first faces (20, 20') being arranged to be parallel to the face (30) of the integrated optical circuit.

5. Connection method employing the connection device according to any one of the preceding claims, characterised in that the following different steps are provided for:
   - placing of an optical fibre (1) into the said connection block (2) with one end of the fibre extending past the said first face (20) of the connection block (2);
   - polishing or cleaving of this end of the fibre (1) and of the said first face (20) as well as a face (30) of the integrated optical circuit (3) with which the end of the fibre (1) is to be coupled;
   - placing of the connection block (2) against the face (30) of the integrated optical circuit in such a way that the first face (20) of the connection block (2) is parallel to the face (30) of the integrated optical circuit;
   - simultaneously with the preceding step, illumination of the first face (20) of the connection block and thereby of the double interface, circuit (3) - air and air-block (2), and observation of the interference fringes sent back by this double interface;
   - adjustment of the parallelism of the faces as a function of the observation of the interference fringes;
   - lateral adjustment of the core of the fibre according to the direction of propagation of the optical guide; and,
   - introduction by capillary action of an adhesive (4) between the first face (20) of the connection block and of the face (30) of the integrated optical circuit (3).

6. Connection method according to Claim 5, characterised in that the placing of the connection block is done with the aid of a pincer (70) mounted on goniometric cradles permitting orientation in all directions.

7. Connection method according to Claim 6, characterised in that in order to put in place two optical fibres (1, 1') to be connected to closely-spaced emplacements on the same integrated optical circuit the method uses two goniometric cradle devices (60 to 63 and 70 to 73), each device incorporating two cradles, each cradle turning around an axis, the two axes being mutually orthogonal and being separated by a shim in the form of a corner, the two edges of the two corners of the two devices being opposite each other.

8. Connection method according to Claim 7, according to which the two fibres (1, 1') are held in grooves formed in two faces (22, 22') of two connection blocks, characterised in that for polishing the first faces (20, 20') of the connection blocks and the ends of the fibres, the two blocks (2, 2') are placed side by side by their faces (22, 22') containing the fibres and that the polishing is done while holding these faces side by side.

**Patentansprüche**

1. Verbindungssystem mit einer optischen Faser, einer integrierten optischen Schaltung und einer Verbindungsvorrichtung, die ein Ende der optischen Faser (1) mit einem Ende eines optischen Leiters (31) verbindet, der bündig an eine Seitenfläche (30) der integrierten optischen Schaltung (3) angrenzt, dadurch gekennzeichnet, daß diese Vorrichtung folgendes aufweist:
   - einen durchsichtigen Verbindungsblock (2), in dem die optische Faser (1) gehalten wird, welcher Block einerseits eine erste polierte Seitenfläche (20) aufweist, an deren Ebene das genannte Ende der Faser bündig angrenzt, welche erste Seitenfläche (20) parallel zur genannten Seitenfläche (30) der integrierten optischen Schaltung (3) angeordnet ist, und andererseits eine zweite Seitenfläche (21) aufweist, die gegen die erste Seitenfläche (20) geneigt ist, und den Ein- und Austritt eines Lichtstrahls, im genannten Verbindungsblock, zuläßt, der unter einem vorgegebenen Winkel den Zwischenraum zwischen der ersten Seitenfläche (20) des Verbindungsblocks (2) und der Seitenfläche der integrierten optischen Schaltung (30) beleuchtet, und das Ausbilden von Interferenzstreifen in diesem Zwischenraum zuläßt; und
   - eine Kleberschicht (4), die zwischen der ersten Seitenfläche (20) des Verbindungsblocks (2) und der Seitenfläche (30) der integrierten optischen Schaltung (3) liegt.

2. Verbindungssystem nach Anspruch 1, dadurch gekennzeichnet, daß die erste Seitenfläche (20) des Verbindungsblocks (2) einen Winkel von im wesentlichen 45° gegenüber der zweiten Seitenfläche (21) einnimmt.

3. Verbindungssystem nach Anspruch 1, dadurch gekennzeichnet, daß die Normale auf der ersten Seitenfläche (20) nicht in einer normal auf der zweiten Seitenfläche (21) stehenden Seitenfläche enthalten ist.

4. Verbindungssystem nach Anspruch 1, dadurch gekennzeichnet, daß jeweils eine von zwei optischen Fasern (1, 1') in einem von zwei Verbindungsblöcken in einer mit einer Rille versehenen Seitenfläche angeordnet ist, welche mit jeweils einer Rille versehenen Seitenflächen (22, 22') dieser Blöcke parallel zueinander angeordnet sind, wobei die Enden dieser Fasern bündig an die zugeordneten ersten Seitenflächen (20, 20') der Verbindungsblöcke (2, 2') angrenzen, welche ersten Seitenflächen (20, 20') parallel zur Seitenfläche (30) der integrierten optischen Schaltung angeordnet sind.

5. Verbindungsverfahren zum Verwenden der Verbindungsvorrichtung nach einem der vorstehenden Ansprüche, dadurch gekennzeichnet, daß die folgenden verschiedenen Schritte vorgesehen sind:
   - Anordnen einer optischen Faser (1) im genannten Verbindungsblock (2) so, daß ein Ende der Faser über die genannte erste Seitenfläche (20) des Verbindungsblocks (2) übersteht;
   - Polieren oder Spalten dieses Endes der Faser (1) und der genannten ersten Seitenfläche (20) wie auch einer Seitenfläche (30) der integrierten optischen Schaltung (3), an welche Seitenfläche das Ende der Faser (1) gekoppelt werden soll;
   - Anordnen des Verbindungsblocks (2) gegen die Seitenfläche (30) der integrierten optischen Schaltung in solcher Weise, daß die erste Seitenfläche (20) des Verbindungsblocks (2) parallel zur Seitenfläche (30) der integrierten optischen Schaltung steht;
   - Beleuchten, gleichzeitig mit dem vorstehenden Schritt, der ersten Seitenfläche (20) des Verbindungsblocks und damit der doppelten Zwischenschicht Schaltung (3) - Luft und Luft - Block (2) und Beobachten der durch diese doppelte Zwischenschicht zurückgestrahlten Interferenzstreifen;
   - Einstellen der Parallelität der Seitenflächen unter Beobachtung der Interferenzstreifen;
   - seitliche Einstellung des Faserkerns gemäß der Ausbreitungsrichtung des optischen Leiters; und
   - Einführen eines Klebers (4) durch Kapillarkraft zwischen der ersten Seitenfläche (20) des Verbindungsblocks und die Seitenfläche (30) der integrierten optischen Schaltung (3).

6. Verbindungsverfahren nach Anspruch 5, dadurch gekennzeichnet, daß das Anordnen des Verbindungsblocks mit Hilfe eines Greifers (70) erfolgt, der an goniometrischen Schwenkgelenken angebracht ist, die eine Orientierung in allen Raumrichtungen zulassen.

7. Verbindungsverfahren nach Anspruch 6, dadurch gekennzeichnet, daß zum Anordnen zweier optischer Fasern (1, 1') die an benachbarte Stellen ein und derselben integrierten optischen Schaltung anzuschließen sind, zwei Vorrichtungen mit goniometrischen Schwenkgelenken (60 bis 63 und 70 bis 73) verwendet werden, wobei jede Vorrichtung zwei Schwenkgelenke trägt, von denen sich jeder um eine Achse dreht, welche zwei Achsen wechselseitig rechtwinklig zueinander stehen und durch ein keilförmiges Zwischenstück voneinander getrennt werden, wobei sich die zwei Kanten der beiden Keile der beiden Vorrichtungen einander gegenüberstehen.

8. Verbindungsverfahren nach Anspruch 7, bei dem die zwei Fasern (1, 1') in Rillen gehalten werden, die in zwei Seitenflächen (22, 22') zweier Verbindungsblöcke ausgebildet sind, dadurch gekennzeichnet, daß zum Polieren der ersten Seitenflächen (20, 20') der Verbindungsblöcke und der Enden der Fasern die zwei Blöcke (2, 2') mit ihren die Fasern enthaltenden Seitenflächen (22, 22') aneinandergeklebt werden und das Polieren bei aneinandergeklebten Seitenflächen erfolgt.

# FIG_1

# FIG_2

# FIG_3

FIG_4

FIG_5

FIG_6

FIG_7

FIG_8

FIG_9